# EUROPEAN PATENT APPLICATION

(11) **EP 4 749 163 A1**
(43) Date of publication of application: **27.05.2026**
(21) Application number: 25218419.7
(22) Date of filing: 25.11.2025
(51) Int. Cl.: F16H 57/04, B60K 11/02, H02K 9/19, H02K 11/30, H02K 11/33, H02K 5/20, H02K 7/116

(54) **POWERTRAIN AND VEHICLE**

(30) Priority: 26.11.2024 CN 202411709548
(71) Applicant: Huawei Digital Power Technologies Co., Ltd., Shenzhen, Guangdong 518043 (CN)
(72) Inventor: WANG, Shuang, Shenzhen, Guangdong, 518043 (CN); LIU, Hongbing, Shenzhen, Guangdong, 518043 (CN); DU, Chuanming, Shenzhen, Guangdong, 518043 (CN)
(74) Representative: Maiwald GmbH

(57) **Abstract**

This application provides a powertrain and a vehicle, and relates to the field of electric vehicles. The powertrain includes a reducer and a motor controller, and a housing of the powertrain includes a reducer housing and an electric control groove. The reducer housing is configured to accommodate a cooling member and a gear shaft assembly of the reducer. The electric control groove is configured to accommodate functional components of the motor controller. An outer peripheral wall of the reducer housing includes a first base plate and a first side plate, and an axial bottom wall of the reducer housing includes an output bearing groove. The first side plate protrudes from the first base plate and away from the output bearing groove. The first side plate is a groove wall of the electric control groove, and the first base plate is a groove bottom of the electric control groove. The cooling member includes at least one hole, and the hole faces one of the first base plate or the first side plate. In this application, coolant is delivered to the first side plate and the first base plate, to cool the electric control groove and the functional components, thereby reducing a risk of an overheating failure of an internal component of the powertrain, and improving performance of the entire vehicle.

## Description

### TECHNICAL FIELD

This application relates to the field of electric vehicle technologies, and in particular, to a powertrain and a vehicle.

### BACKGROUND

A powertrain is a power source of an entire vehicle. With the continuous development of the new energy industry, a requirement for power density of the powertrain is increasingly high. If cooling effect on an internal component of the powertrain is poor, the internal component is at risk of an overheating failure, thereby adversely affecting normal operating of the powertrain.

### SUMMARY

Embodiments of this application provide a powertrain and a vehicle.

According to a first aspect, an embodiment of this application provides a powertrain. The powertrain includes a reducer and a motor controller, and a housing of the powertrain includes a reducer housing and an electric control groove. The reducer housing is configured to accommodate a cooling member and a gear shaft assembly of the reducer. The electric control groove is configured to accommodate a plurality of functional components of the motor controller.

An outer peripheral wall of the reducer housing includes a first base plate and a first side plate that are connected to each other, an axial bottom wall of the reducer housing includes an output bearing groove, and the output bearing groove is configured to accommodate a bearing of an output shaft of the gear shaft assembly. The first side plate protrudes from the first base plate and away from the output bearing groove. The first side plate is a groove wall of the electric control groove, and the first base plate is a groove bottom of the electric control groove.

The cooling member includes at least one hole, the at least one hole communicates with an internal flow channel of the reducer housing through an internal channel of the cooling member, and the at least one hole faces one of the first base plate or the first side plate.

In this embodiment of this application, the gear shaft assembly of the reducer is configured to implement transmission of mechanical energy between a motor and a wheel. The output shaft of the gear shaft assembly is in transmission connection with the wheel, and the output shaft is configured to drive the wheel to rotate. The bearing of the output shaft is located in the output bearing groove of the reducer housing.

In this embodiment of this application, the electric control groove is a groove-shaped housing of the motor controller. The functional component accommodated in the electric control groove usually has a relatively low temperature resistance level and relatively high heat generation per unit volume, and temperature rise control needs to be performed on the functional component. Currently, a thickness of the electric control groove is usually thin, making it difficult to lay out a cooling channel in the electric control groove for coolant circulation. Therefore, cooling of the functional component faces a challenge. The temperature resistance level is a maximum allowable working temperature.

To resolve the foregoing problem, in this embodiment of this application, the first side plate and the first base plate of the reducer housing are directly used to construct one groove wall and the groove bottom of the electric control groove, and the hole of the cooling member in the reducer housing faces one of the first base plate or the first side plate. When coolant is transmitted from the internal flow channel of the reducer housing to the internal channel of the cooling member, the coolant in the cooling member can flow to the groove bottom or the groove wall of the electric control groove through the hole. A temperature of the electric control groove decreases, thereby helping implement temperature rise control of the functional component, that is, heat generated by the functional component can be transferred to the coolant through the electric control groove.

In this embodiment of this application, the reducer housing includes the outer peripheral wall and the axial bottom wall, and the outer peripheral wall is located on an outer peripheral side of the axial bottom wall. The first base plate and the first side plate that participate in forming the electric control groove belong to the outer peripheral wall of the reducer housing, and the first side plate intersects with the first base plate. The axial bottom wall of the reducer housing includes the output bearing groove. The first side plate, the first base plate, and the output bearing groove are sequentially arranged in a radial direction of the powertrain. The cooling member is located at a position that is in the reducer housing and that is close to the bearing of the output shaft of the gear shaft assembly. The cooling member is located outside the electric control groove, and does not occupy space inside the electric control groove, thereby helping optimize an internal layout of the motor controller. The coolant in the cooling member does not enter the electric control groove and directly comes into contact with the functional component, so that interference to normal working of the motor controller can be avoided. In addition, the coolant is always located in the reducer housing after flowing out of the cooling member, thereby facilitating recycling of the coolant.

In this embodiment of this application, the first base plate and the first side plate of the reducer housing participate in forming the electric control groove, and this is equivalent to that the groove bottom and one groove wall of the electric control groove are integrated with the reducer housing, thereby helping improve stability of an overall structure of the electric control groove. In this embodiment of this application, no cooling channel is directly disposed in the electric control groove, to avoid adverse impact on structural strength of the electric control groove caused by the cooling channel. That the groove bottom and one groove wall of the electric control groove are integrated with the reducer housing further helps enhance cooling effect. If the electric control groove and the reducer housing are split structures, or although the electric control groove and the reducer housing are integrated, the electric control groove and the reducer housing do not share a housing wall, in the two cases, even if the cooling member is also used to deliver coolant to the first base plate or the first side plate of the reducer housing, heat dissipation effect of the coolant on the functional component is adversely affected due to a longer heat transmission path.

In an embodiment, the functional component is thermally connected to one of the first base plate or the first side plate by using a thermal interface material, and a thermal conductivity of the thermal interface material is greater than a thermal conductivity of air. The thermal conductivity is an amount of heat transferred per unit time through a unit heat-conducting surface under a unit temperature gradient. The thermal interface material is configured to transfer heat generated by the functional component to the one of the first base plate or the first side plate, and the heat is then carried away by the coolant flowing out through the hole, thereby helping improve heat transfer efficiency and cooling effect of the cooling member on the functional component.

In an embodiment, different holes of the cooling member may respectively face the first base plate and the first side plate, so that both the first base plate and the first side plate can receive the coolant from the cooling member, thereby helping further improve the cooling effect on the functional component.

In an embodiment, the powertrain further includes a motor, the housing of the powertrain further includes a motor housing and a connecting plate, and the motor housing is configured to accommodate a stator and a rotor of the motor.

The connecting plate and the motor housing are arranged on a same side of the reducer housing in an axial direction of the powertrain. The connecting plate is separately fastened to the outer peripheral wall of the reducer housing and an outer peripheral wall of the motor housing. The connecting plate, the first base plate, the first side plate, and the outer peripheral wall of the motor housing are configured to enclose the electric control groove.

In this embodiment of this application, the reducer housing is only configured to form a part of the electric control groove. Based on the reducer housing, in combination with the connecting plate and the outer peripheral wall of the motor housing, this helps adjust a size of the electric control groove based on an actual requirement, and improve flexibility of an internal layout of the electric control groove. Both the connecting plate and the motor housing are located on a same side of the reducer housing in the axial direction of the powertrain, and an arrangement direction of the connecting plate and the motor housing intersects with the axial direction of the powertrain. The reducer housing, the motor housing, and the connecting plate are arranged in a compact manner, thereby helping reduce difficulty in forming the electric control groove, and further helping implement a miniaturization design of the powertrain and optimize a layout of an entire vehicle. In addition, temperatures of the housing and the internal components of the powertrain affect each other. Because the reducer housing and the motor housing jointly form the electric control groove, the cooling member reduces temperatures of the reducer housing and the functional component, and this also helps implement temperature rise control of the motor housing and the motor.

In an embodiment, a gap that is between the first base plate and the output bearing groove and that is in the radial direction of the powertrain is configured to accommodate the cooling member, and the at least one hole of the cooling member faces the first base plate in the radial direction of the powertrain.

In this embodiment of this application, an opening direction of the output bearing groove is parallel to the axial direction of the powertrain, and the first base plate and a groove wall of the output bearing groove are spaced apart in the radial direction of the powertrain. The cooling member is located in the gap that is between the first base plate and the output bearing groove and that is in the radial direction of the powertrain, and is arranged in a compact manner. The hole of the cooling member faces the first base plate, so that the coolant in the cooling member can move to the first base plate and exchange heat with the functional component through the first base plate.

In an embodiment, a projection of each hole of the cooling member is located in a projection of the first base plate in the radial direction of the powertrain. This embodiment of this application helps the first base plate to receive coolant delivered through each hole, and helps improve utilization and cooling effect of the coolant.

In an embodiment, in the radial direction of the powertrain, a spacing between the first base plate and the cooling member is less than a spacing between the cooling member and the output bearing groove.

In this embodiment of this application, a radial spacing between the first base plate and the cooling member is relatively small, thereby helping shorten a transmission path of the coolant between the cooling member and the first base plate, reduce a loss of the coolant on the transmission path, and improve cooling effect of the coolant. A radial spacing between the cooling member and the output bearing groove is relatively large, so that space can be reserved for the gear shaft assembly of the reducer, thereby avoiding interference to a layout and mounting of the gear shaft assembly.

In an embodiment, the gear shaft assembly of the reducer includes an output gear, and the output gear is configured to be in transmission connection with the output shaft. A gap that is between the first side plate and the output gear and that is in the axial direction of the powertrain is configured to accommodate the cooling member, and the at least one hole of the cooling member faces the first side plate in the axial direction of the powertrain.

In this embodiment of this application, the output bearing groove is configured to accommodate the output shaft bearing, and the output gear is configured to be in transmission connection with the output shaft. The cooling member is located in the gap that is between the first side plate and the output gear and that is in the axial direction of the powertrain, and is arranged in a compact manner. The hole of the cooling member faces the first side plate, so that the coolant in the cooling member can move to the first side plate and exchange heat with the functional component through the first side plate.

In an embodiment, a projection of each hole of the cooling member is located in a projection of the first side plate in the axial direction of the powertrain. This embodiment of this application helps the first side plate to receive coolant delivered through each hole, and helps improve utilization and cooling effect of the coolant.

In an embodiment, in the axial direction of the powertrain, a spacing between the first side plate and the cooling member is less than a spacing between the cooling member and the output gear.

In this embodiment of this application, a radial spacing between the first side plate and the cooling member is relatively small, thereby helping shorten a transmission path of the coolant between the cooling member and the first side plate, reduce a loss of the coolant on the transmission path, and improve cooling effect of the coolant. A radial spacing between the cooling member and the output gear is relatively large, so that interference caused by the cooling member to rotation of the output gear can be avoided, thereby facilitating normal working of the gear shaft assembly.

In an embodiment, a ratio of a spacing between one of the first base plate or the first side plate and the cooling member to an inner diameter of each hole is greater than or equal to 1 and less than or equal to 3.

In this embodiment of this application, an example in which the hole of the cooling member faces the first base plate is used, and a spacing that is between the first base plate and the cooling member and that is in the radial direction of the powertrain is greater than or equal to the inner diameter of each hole. The spacing between the first base plate and the cooling member is controlled within a proper range, so that mounting difficulty of the cooling member can be reduced without affecting coolant delivery. In addition, the inner diameter of the hole of the cooling member is relatively small, thereby helping implement appropriate distribution of a coolant flow rate. The internal channel of the cooling member communicates with the internal flow channel of the reducer housing. It may be understood that coolant in the internal flow channel of the reducer housing flows to another structure in addition to the cooling member. If the inner diameter of the hole of the cooling member is too large, most of the coolant may flow to the cooling member, and consequently, cooling of the another structure is adversely affected.

In an embodiment, the plurality of functional components of the motor controller include at least one of a busbar capacitor or an inductor, and the first base plate is configured to fasten the at least one of the busbar capacitor or the inductor. The at least one of the busbar capacitor or the inductor, the first base plate, and the output bearing groove are sequentially arranged in the radial direction of the powertrain.

A distance between the at least one of the busbar capacitor or the inductor and the one of the first base plate or the first side plate is less than or equal to a distance between the cooling member and the one of the first base plate or the first side plate.

In this embodiment of this application, the busbar capacitor is configured to transmit and adjust a direct current, including but not limited to smoothing a voltage, reducing an inductance parameter, reducing a spike voltage, absorbing a high-pulse current from the power module, and preventing overcharging of the voltage and impact of an instantaneous voltage on the power module. The inductor is configured to perform filtering and regulate a current.

In this embodiment of this application, the first base plate supports the at least one of the busbar capacitor or the inductor. When the hole faces the first base plate, the at least one of the busbar capacitor or the inductor, the first base plate, and the output bearing groove are sequentially arranged in the radial direction of the powertrain, and a distance between the at least one of the busbar capacitor or the inductor and the first base plate is less than or equal to a distance between the cooling member and the first base plate, so that a transmission path of the coolant between the cooling member and the at least one of the busbar capacitor or the inductor can be shortened. When the hole faces the first side plate, the at least one of the busbar capacitor or the inductor, the first base plate, and the output bearing groove are sequentially arranged in the radial direction of the powertrain, and a distance between the at least one of the busbar capacitor or the inductor and the first side plate is less than or equal to a distance between the cooling member and the first side plate. This means that compared with a second side plate and the cooling member, the at least one of the busbar capacitor or the inductor is closer to the first side plate in the axial direction of the powertrain, so that a heat transmission path can also be shortened, thereby improving cooling effect.

In an embodiment, the cooling member includes a cooling member housing and a copper bar, and one end of the copper bar is adjacent to the internal channel of the cooling member or exposed in the internal channel of the cooling member.

The axial bottom wall of the reducer housing further includes a communication hole, an opening of the communication hole faces an inner cavity of the reducer housing, and the communication hole is arranged between the first base plate and the output bearing groove. One end of the copper bar is configured to connect to a winding of the motor, and the other end of the copper bar is configured to pass through the communication hole to connect to the power module of the motor controller.

In this embodiment of this application, an inner wall of the cooling member housing is configured to form the internal channel and accommodate one end of the copper bar. That the one end of the copper bar is exposed in the internal channel of the cooling member means that at least a part of a surface of the one end of the copper bar can be in direct contact with coolant in the internal channel, to implement cooling of the copper bar.

In this embodiment of this application, as an internal component of the powertrain, the copper bar is configured to transmit electric energy between the power module and the winding. Because a working current flowing through the copper bar is usually relatively large, heat generated by the copper bar is also relatively large. Therefore, in this application, the cooling member is reused to implement cooling and heat dissipation for the copper bar, to avoid an overheating failure of the copper bar. Specifically, the axial bottom wall of the reducer housing includes the communication hole, and the one end of the copper bar extends into the inner cavity of the reducer housing through the communication hole. The one end of the copper bar is fastened to the cooling member housing. Because the one end of the copper bar is adjacent to the internal channel or the one end of the copper bar is exposed in the internal channel, in addition to flowing to the first base plate or the first side plate through the hole, the coolant in the internal channel can be further configured to cool the copper bar, thereby improving utilization of the coolant. In the radial direction of the powertrain, the communication hole is located between the first base plate and the output bearing groove, that is, the communication hole and the cooling member are arranged opposite to each other in the axial direction of the powertrain, thereby helping reduce difficulty in fastening the one end of the copper bar to the cooling member housing.

In an embodiment, the cooling member housing and the copper bar are integrated through injection molding, thereby helping enhance stability of a connection between the copper bar and the cooling member housing.

In an embodiment, the cooling member includes another copper bar. The another copper bar is configured to electrically connect the power module of the motor controller and the winding of the motor. The axial bottom wall of the reducer housing includes another communication hole. The another copper bar extends from the electric control groove into the inner cavity of the reducer housing through the another communication hole. One end of the another copper bar is fastened to the cooling member housing, and in the radial direction of the powertrain, a difference between a spacing between the one end of the another copper bar and the internal channel of the cooling member and a spacing between the one end of the copper bar and the internal channel of the cooling member is less than a thickness of the copper bar.

In this embodiment of this application, the another copper bar is also configured to transmit electric energy between the power module and the winding. Both the one end of the copper bar and the one end of the another copper bar are fastened to the cooling member housing, and a difference in cooling effect needs to be considered for arrangement of the one end of the copper bar and the one end of the another copper bar. It may be understood that a smaller spacing between the copper bar and the internal channel of the cooling member leads to better cooling effect. The difference between the spacing between the one end of the another copper bar and the internal channel of the cooling member and the spacing between the one end of the copper bar and the internal channel of the cooling member is less than the thickness of the copper bar, thereby helping control a cooling effect difference between the copper bar and the another copper bar, and avoid a problem of local overheating of different copper bars.

In an embodiment, the powertrain includes a copper bar, and the copper bar is configured to electrically connect a power module of the motor controller and a winding of the motor. The at least one hole includes a first hole and a second hole, the first hole and the second hole are spaced apart, and a projection of the first hole is located in a projection of one functional component in an opening direction of the first hole.

The copper bar is located between the one of the first base plate or the first side plate and the second hole, and a projection of the copper bar does not overlap the projection of the first hole in the opening direction of the first hole.

In this embodiment of this application, an example in which the hole of the cooling member faces the first base plate is used, and the opening direction of the first hole is parallel to the radial direction of the powertrain. The projection of the first hole in the hole direction of the first hole avoids the copper bar, and the projection of the first hole is located in a projection of one functional component, so that the first hole can be configured to deliver coolant to the first base plate to cool the functional component, and the copper bar does not cause interference to coolant delivery through the first hole. The second hole is spaced apart from the first hole, and the copper bar is located between the first base plate and the second hole. In this case, the copper bar is located outside the cooling member housing. A projection of the second hole at least partially overlaps the projection of the copper bar in the hole direction of the first hole, so that coolant can flow to the copper bar through the second hole, to reduce a temperature of the copper bar. This embodiment of this application provides greater flexibility and freedom in routing the copper bar from the electric control groove.

In an embodiment, one of the first base plate or the first side plate includes a plurality of protrusions, and the plurality of protrusions protrude toward the cooling member in the opening direction of the first hole. The plurality of protrusions surround the projection of the first hole onto the one of the first base plate or the first side plate in the opening direction of the first hole, and projections of the plurality of protrusions partially overlap the projection of the functional component in the opening direction of the first hole.

In this embodiment of this application, an example in which the hole of the cooling member faces the first base plate is used. A projection of the first hole onto the first base plate in the opening direction of the first hole is equivalent to a region in which coolant moving from the first hole strikes the first base plate, and the region is denoted as a first region. A plurality of protrusions of the first base plate surround the first region, so that after the coolant flows to the first region, the coolant can radially disperse across the first base plate under guidance of the plurality of protrusions by using the first region as a center, thereby helping expand coverage of the coolant on the first base plate and improve heat dissipation efficiency. Projections of the plurality of protrusions partially overlap a projection of one functional component in the opening direction of the first hole, so that the coolant can cool the functional component in a targeted manner. In an embodiment, the projections of the plurality of protrusions do not overlap a projection of another hole of the cooling member in the opening direction of the first hole, to avoid interference to coolant delivery through the another hole.

In an embodiment, the at least one hole includes the first hole and a third hole. The third hole and the first hole are spaced apart in a length direction of the functional component, and both the third hole and the first hole are located in the projection of the functional component in the opening direction of the first hole.

A spacing between the third hole and the first hole in the length direction of the functional component is less than a length of the functional component, and an opening direction of the third hole intersects with the opening direction of the first hole.

In this embodiment of this application, projections of both the first hole and the third hole are located in the projection of the same functional component in the opening direction of the first hole, and coolant flows to one of the first base plate or the first side plate through the first hole and the third hole, to cool and dissipate heat for the same functional component. For the first hole and the third hole, the spacing between the first hole and the third hole in the length direction of the functional component is less than the length of the functional component, thereby helping reduce space occupied by the cooling member in the reducer housing. The opening directions of the first hole and the third hole intersect, so that coverage of the coolant on the first base plate or the first side plate can be expanded when an overall size of the cooling member is controlled.

In an embodiment, the connecting plate includes two second side plates connected to each other, and the outer peripheral wall of the motor housing includes a third side plate. One second side plate and the first side plate are arranged opposite to each other in the axial direction of the powertrain, and the other second side plate and the third side plate are arranged opposite to each other.

The two second side plates and the third side plate are the other three groove walls of the electric control groove.

In this embodiment of this application, the connecting plate, the reducer housing, and the motor housing jointly form the four groove walls of the electric control groove. It may be understood that, to enable the electric control groove to form a semi-enclosed groove-shaped housing, in terms of the groove walls of the electric control groove, the first side plate is separately connected to the other second side plate and the third side plate, and the one second side plate is also separately connected to the other second side plate and the third side plate. In terms of the groove walls and the groove bottom of the electric control groove, the one second side plate, the other second side plate, and the third side plate are all connected to the first base plate.

According to a second aspect, an embodiment of this application provides a vehicle. The vehicle includes a vehicle frame, a battery pack, and the powertrain according to any one of embodiments of the first aspect. The vehicle frame is configured to fasten the battery pack and the powertrain, the battery pack is configured to supply power to the motor by using the motor controller, and the motor is configured to be in transmission connection with the reducer to drive a wheel of the vehicle.

This embodiment of this application helps the functional component to work at a proper temperature, so that the powertrain is in a normal and stable working environment, thereby improving performance of the entire vehicle.

### BRIEF DESCRIPTION OF DRAWINGS

To describe technical solutions in embodiments of this application more clearly, the following describes accompanying drawings used in embodiments of this application.
FIG. 1 is a diagram of a vehicle according to an embodiment of this application;
FIG. 2 is a diagram of a powertrain according to an embodiment of this application;
FIG. 3 is a diagram of a powertrain according to an embodiment of this application;
FIG. 4 is a diagram of a powertrain according to an embodiment of this application;
FIG. 5 is a diagram of a powertrain according to an embodiment of this application;
FIG. 6 is a diagram of a cooling member according to an embodiment of this application;
FIG. 7 is a diagram of a cooling member according to an embodiment of this application;
FIG. 8 is a diagram of a powertrain according to an embodiment of this application;
FIG. 9 is a diagram of a powertrain according to an embodiment of this application;
FIG. 10 is a diagram of a powertrain according to an embodiment of this application; and
FIG. 11 is a diagram of a reducer housing according to an embodiment of this application.

### DESCRIPTION OF EMBODIMENTS

The following describes technical solutions in embodiments of this application with reference to accompanying drawings in embodiments of this application. It is clear that the described embodiments are merely a part rather than all of embodiments of this application.

For ease of understanding, the following first explains and describes related technical terms used in embodiments of this application.

Parallel: "Parallel" defined in embodiments of this application is not limited to absolute parallelism. A definition of parallelism herein may be understood as basic parallelism, and includes non-absolute parallelism caused by influencing factors such as an assembly tolerance, a design tolerance, and structural flatness.

Currently, cooling effect on an internal component of a powertrain needs to be improved. An embodiment of this application provides a powertrain. The powertrain includes a reducer and a motor controller. The motor controller is configured to transmit electric energy to a motor of the powertrain. The motor is configured to convert the electric energy into mechanical energy and be in transmission connection with the reducer. A housing of the powertrain includes a reducer housing and an electric control groove. The reducer housing is configured to accommodate a cooling member and a gear shaft assembly of the reducer. The gear shaft assembly is configured to transmit the mechanical energy from the motor to a wheel of a vehicle. The electric control groove is configured to accommodate a plurality of functional components and a power module that are of the motor controller, the functional components are configured to electrically connect to the power module of the motor controller, and the power module is configured to implement alternating current/direct current conversion.

An outer peripheral wall of the reducer housing includes a first base plate and a first side plate that are connected to each other, an axial bottom wall of the reducer housing includes an output bearing groove, the output bearing groove is configured to accommodate a bearing of an output shaft of the gear shaft assembly, and the output shaft is configured to be in transmission connection with the wheel. The first side plate protrudes from the first base plate and away from the output bearing groove, the first side plate is a groove wall of the electric control groove, and the first base plate is a groove bottom of the electric control groove.

The cooling member includes at least one hole, the at least one hole communicates with an internal flow channel of the reducer housing through an internal channel of the cooling member, the internal channel of the cooling member is configured to accommodate coolant, and the at least one hole faces one of the first base plate or the first side plate, so that the coolant in the internal channel can flow to the one of the first base plate or the first side plate through the hole.

In this embodiment of this application, the first side plate and the first base plate of the reducer housing are respectively used to form one groove wall and the groove bottom of the electric control groove, the hole of the cooling member faces the first side plate or the first base plate, and the coolant is delivered to the first side plate or the first base plate, to cool the electric control groove and the functional components, thereby reducing a risk of an overheating failure of an internal component of the powertrain. The powertrain provided in this embodiment of this application may be used in a vehicle.

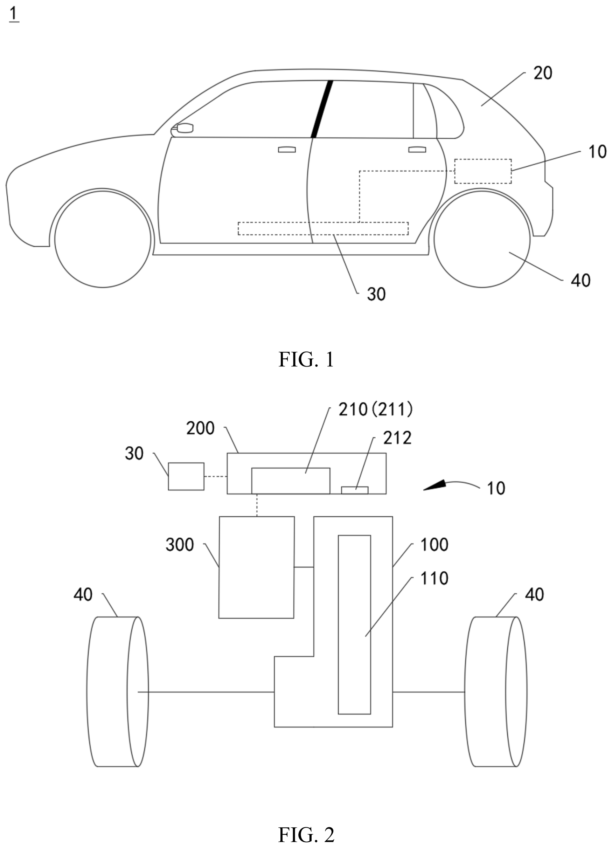

Refer to FIG. 1. FIG. 1 is a diagram of a vehicle 1 according to an embodiment of this application. In this embodiment of this application, the vehicle 1 is a wheeled device driven or pulled by a power apparatus. In this embodiment of this application, the vehicle 1 includes a vehicle frame 20, a battery pack 30, and a powertrain 10. The vehicle frame 20 is a structural framework of the vehicle 1. The vehicle frame 20 is configured to mount the battery pack 30 and the powertrain 10, and can withstand internal and external environmental loads of the vehicle 1. The battery pack 30 is configured to supply power to the powertrain 10, and the battery pack 30 may also be referred to as a power battery. The powertrain 10 is a power source of the vehicle 1, and the powertrain 10 is configured to drive wheels 40 of the vehicle 1.

Refer to FIG. 2. FIG. 2 is a diagram of a powertrain 10 according to an embodiment of this application. In this embodiment of this application, the powertrain 10 includes a reducer 100, a motor controller 200, and a motor 300. The motor controller 200 includes a power module and a functional component 210. The power module is a combination of power electronic components that can implement a power conversion function. The power module receives, by using a copper bar 900, a direct current transmitted by a battery pack 30, converts the direct current into an alternating current, and then transmits the alternating current to a winding of the motor 300 by using the copper bar 900. The functional component 210 is electrically connected to the power module, and the functional component 210 is configured to perform at least one function of filtering, voltage stabilization, energy storage, or power transmission. The motor 300 is configured to receive electric energy and convert the electric energy into mechanical energy, and the motor 300 is in transmission connection with the reducer 100 to drive wheels 40 to rotate. It should be noted that FIG. 2 merely schematically shows an electrical connection relationship and a mechanical connection relationship between internal components of the powertrain 10, and does not represent specific structures and position relationships of the internal components.

An internal component of the powertrain 10, for example, the functional component 210 of the motor controller 200, generates heat in a working process. If cooling efficiency is relatively low, a temperature of the internal component may be very high, and this adversely affects normal working of the motor controller 200, the reducer 100, and the motor 300, and may cause a fault of the powertrain 10 in a severe case.

In this embodiment of this application, a manner of cooling the internal component of the powertrain 10 is improved, thereby helping improve cooling effect and ensure normal operating of the powertrain 10.

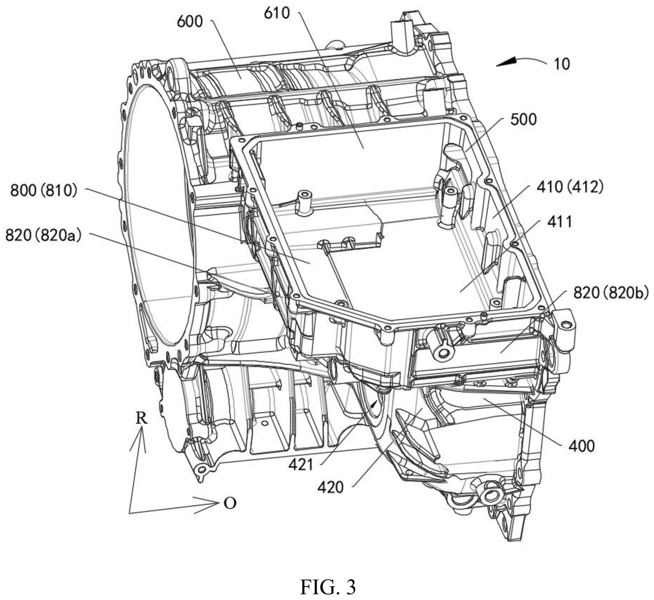

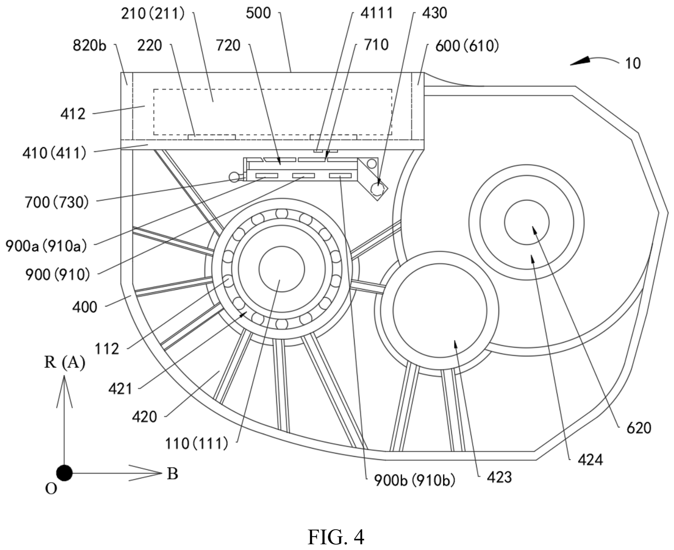

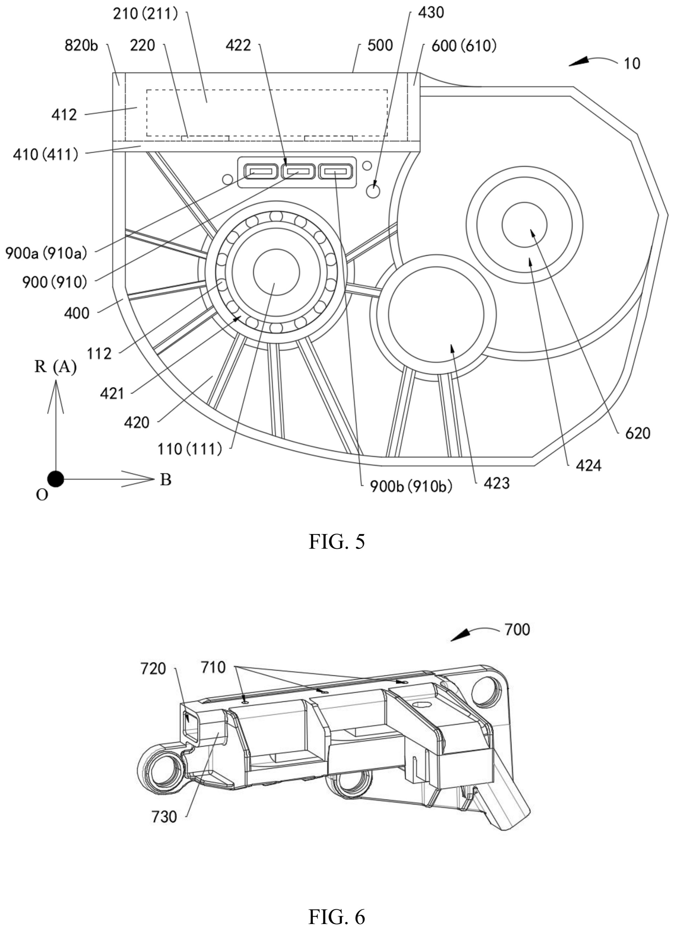

Refer to FIG. 2 to FIG. 6. FIG. 3 is a diagram of a powertrain 10 according to an embodiment of this application. FIG. 4 is a diagram of a powertrain 10 according to an embodiment of this application. FIG. 5 is a diagram of a powertrain 10 according to an embodiment of this application. FIG. 6 is a diagram of a cooling member 700 according to an embodiment of this application.

In an embodiment, as shown in FIG. 2 and FIG. 3, a housing of the powertrain 10 includes a reducer housing 400 and an electric control groove 500. The reducer housing 400 is configured to accommodate a cooling member 700 and a gear shaft assembly 110 of the reducer 100. The electric control groove 500 is configured to accommodate a plurality of functional components 210 of the motor controller 200.

As shown in FIG. 3 to FIG. 5, an outer peripheral wall 410 of the reducer housing 400 includes a first base plate 411 and a first side plate 412 that are connected to each other, an axial bottom wall 420 of the reducer housing 400 includes an output bearing groove 421, and the output bearing groove 421 is configured to accommodate a bearing of an output shaft 111 of the gear shaft assembly 110. The first side plate 412 protrudes from the first base plate 411 and away from the output bearing groove 421. The first side plate 412 is a groove wall of the electric control groove 500, and the first base plate 411 is a groove bottom of the electric control groove 500.

As shown in FIG. 4 to FIG. 6, the cooling member 700 includes at least one hole 710, the at least one hole 710 communicates with an internal flow channel 430 of the reducer housing 400 through an internal channel 720 of the cooling member 700, and the at least one hole 710 faces one of the first base plate 411 or the first side plate 412.

In this embodiment of this application, the gear shaft assembly 110 of the reducer 100 is configured to implement transmission of mechanical energy between the motor 300 and the wheels 40. The output shaft 111 of the gear shaft assembly 110 is in transmission connection with the wheels 40, and the output shaft 111 is configured to drive the wheels 40 to rotate. The bearing of the output shaft 111 is located in the output bearing groove 421 of the reducer housing 400, and the bearing of the output shaft 111 is denoted as an output shaft bearing 112. In an embodiment, the axial bottom wall 420 of the reducer housing 400 further includes an intermediate bearing groove 423 and an input bearing groove 424. The intermediate bearing groove 423 is configured to accommodate a bearing of an intermediate shaft of the gear shaft assembly 110, and the input bearing groove 424 is configured to accommodate a bearing of an input shaft of the gear shaft assembly 110. The input bearing groove 424 communicates with a motor shaft hole 620 of a motor housing 600, the motor shaft hole 620 is configured to accommodate a motor shaft of the motor, and the motor shaft of the motor is configured to transmit mechanical energy to the input shaft. The input shaft, the intermediate shaft, and the output shaft are sequentially in transmission connection.

In this embodiment of this application, the electric control groove 500 is a groove-shaped housing of the motor controller 200. The functional component 210 accommodated in the electric control groove 500 usually has a relatively low temperature resistance level and relatively high heat generation per unit volume, and temperature rise control needs to be performed on the functional component 210. Currently, a thickness of the electric control groove 500 is usually thin, making it difficult to lay out a cooling channel in the electric control groove 500 for coolant circulation. Therefore, cooling of the functional component 210 faces a challenge. The temperature resistance level is a maximum allowable working temperature.

To resolve the foregoing problem, in this embodiment of this application, the first side plate 412 and the first base plate 411 of the reducer housing 400 are directly used to construct one groove wall and the groove bottom of the electric control groove 500, and the hole 710 of the cooling member 700 in the reducer housing 400 faces one of the first base plate 411 or the first side plate 412. When coolant is transmitted from the internal flow channel 430 of the reducer housing 400 to the internal channel 720 of the cooling member 700, the coolant in the cooling member 700 can flow to the groove bottom or the groove wall of the electric control groove 500 through the hole 710. A temperature of the electric control groove 500 decreases, thereby helping implement temperature rise control of the functional component 210, that is, heat generated by the functional component 210 can be transferred to the coolant through the electric control groove 500. In an embodiment, the internal flow channel 430 of the reducer housing 400 is located on the axial bottom wall 420 of the reducer housing 400. In an embodiment, the coolant may be any one of glycol cooling oil, synthetic oil, and mineral oil.

In an embodiment, the functional component 210 is thermally connected to one of the first base plate 411 or the first side plate 412 by using a thermal interface material 220, and a thermal conductivity of the thermal interface material 220 is greater than a thermal conductivity of air. The thermal conductivity is an amount of heat transferred per unit time through a unit heat-conducting surface under a unit temperature gradient. The thermal interface material 220 is configured to transfer heat generated by the functional component 210 to the one of the first base plate 411 or the first side plate 412, and the heat is then carried away by the coolant flowing out through the hole 710, thereby helping improve heat transfer efficiency and cooling effect of the cooling member 700 on the functional component 210. For example, the thermal interface material 220 may be a thermal pad or a thermal gel.

In an embodiment, different holes 710 of the cooling member 700 may respectively face the first base plate 411 and the first side plate 412, so that both the first base plate 411 and the first side plate 412 can receive the coolant from the cooling member 700, thereby helping further improve the cooling effect on the functional component 210.

In this embodiment of this application, the reducer housing 400 includes the outer peripheral wall 410 and the axial bottom wall 420, and the outer peripheral wall 410 is located on an outer peripheral side of the axial bottom wall 420. The first base plate 411 and the first side plate 412 that participate in forming the electric control groove 500 belong to the outer peripheral wall 410 of the reducer housing 400, and the first side plate 412 intersects with the first base plate 411. The axial bottom wall 420 of the reducer housing 400 includes the output bearing groove 421. The first side plate 412, the first base plate 411, and the output bearing groove 421 are sequentially arranged in a radial direction R of the powertrain 10. The cooling member 700 is located at a position that is in the reducer housing 400 and that is close to the bearing of the output shaft 111 of the gear shaft assembly 110. The cooling member 700 is located outside the electric control groove 500, and does not occupy space inside the electric control groove 500, thereby helping optimize an internal layout of the motor controller 200. The coolant in the cooling member 700 does not enter the electric control groove 500 and directly comes into contact with the functional component 210, so that interference to normal working of the motor controller 200 can be avoided. In addition, the coolant is always located in the reducer housing 400 after flowing out of the cooling member 700, thereby facilitating recycling of the coolant.

In this embodiment of this application, the first base plate 411 and the first side plate 412 of the reducer housing 400 participate in forming the electric control groove 500, and this is equivalent to that the groove bottom and one groove wall of the electric control groove 500 are integrated with the reducer housing 400, thereby helping improve stability of an overall structure of the electric control groove 500. In this embodiment of this application, no cooling channel is directly disposed in the electric control groove 500, to avoid adverse impact on structural strength of the electric control groove 500 caused by the cooling channel. That the groove bottom and one groove wall of the electric control groove 500 are integrated with the reducer housing 400 further helps enhance cooling effect. If the electric control groove 500 and the reducer housing 400 are split structures, or although the electric control groove 500 and the reducer housing 400 are integrated, the electric control groove 500 and the reducer housing 400 do not share a housing wall, in the two cases, even if the cooling member 700 is also used to deliver coolant to the first base plate 411 or the first side plate 412 of the reducer housing 400, heat dissipation effect of the coolant on the functional component 210 is adversely affected due to a longer heat transmission path.

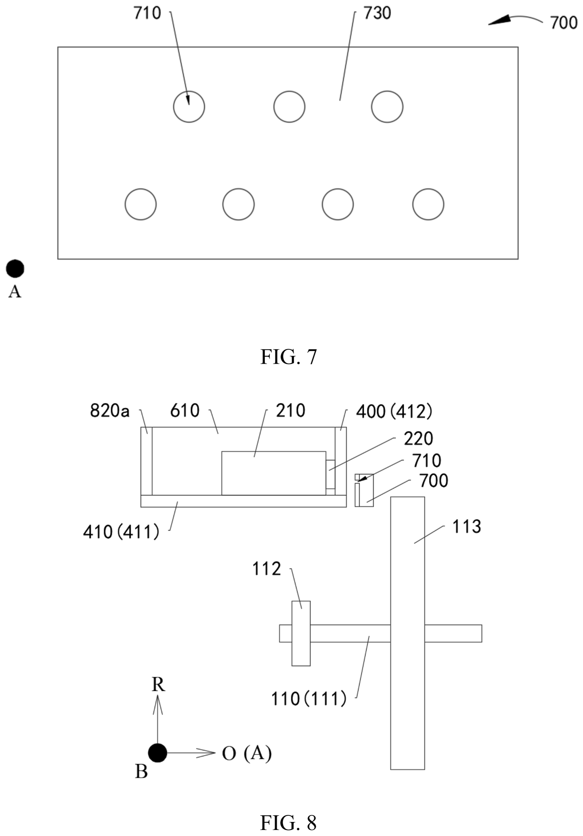

It may be understood that, in this embodiment of this application, a quantity and positions of holes 710 of the cooling member 700 are not limited to FIG. 4 and FIG. 6. Refer to FIG. 7. FIG. 7 is a diagram of a cooling member 700 according to an embodiment of this application. For example, to expand coverage of the coolant on the first base plate 411 or the first side plate 412 and improve cooling efficiency, the holes 710 of the cooling member 700 may be adjusted to a layout shown in FIG. 7.

Still refer to FIG. 2 to FIG. 4. In an embodiment, the powertrain 10 further includes a motor 300, the housing of the powertrain 10 further includes a motor housing 600 and a connecting plate 800, and the motor housing 600 is configured to accommodate a stator and a rotor of the motor 300. The connecting plate 800 and the motor housing 600 are arranged on a same side of the reducer housing 400 in an axial direction O of the powertrain 10. The connecting plate 800 is separately fastened to the outer peripheral wall 410 of the reducer housing 400 and an outer peripheral wall 410 of the motor housing 600. The connecting plate 800, the first base plate 411, the first side plate 412, and the outer peripheral wall 410 of the motor housing 600 are configured to enclose the electric control groove 500.

In this embodiment of this application, the reducer housing 400 is only configured to form a part of the electric control groove 500. Based on the reducer housing 400, in combination with the connecting plate 800 and the outer peripheral wall 410 of the motor housing 600, this helps adjust a size of the electric control groove 500 based on an actual requirement, and improve flexibility of an internal layout of the electric control groove 500. Both the connecting plate 800 and the motor housing 600 are located on a same side of the reducer housing 400 in the axial direction O of the powertrain 10, and an arrangement direction of the connecting plate 800 and the motor housing 600 intersects with the axial direction O of the powertrain 10. The reducer housing 400, the motor housing 600, and the connecting plate 800 are arranged in a compact manner, thereby helping reduce difficulty in forming the electric control groove 500, and further helping implement a miniaturization design of the powertrain 10 and optimize a layout of an entire vehicle. In addition, temperatures of the housing and the internal components of the powertrain 10 affect each other. Because the reducer housing 400 and the motor housing 600 jointly form the electric control groove 500, the cooling member 700 reduces temperatures of the reducer housing 400 and the functional component 210, and this also helps implement temperature rise control of the motor housing 600 and the motor 300.

In an embodiment, the reducer housing 400 and the motor housing 600 are integrated. This embodiment of this application helps improve structural stability of the reducer housing 400, the electric control groove 500, and the motor housing 600.

Still refer to FIG. 3 and FIG. 4. In an embodiment, the connecting plate 800 includes two second side plates 820 connected to each other, and the outer peripheral wall 410 of the motor housing 600 includes a third side plate 610. One second side plate 820 and the first side plate 412 are arranged opposite to each other in the axial direction O of the powertrain 10, and the other second side plate 820 and the third side plate 610 are arranged opposite to each other. The two second side plates 820 and the third side plate 610 are the other three groove walls of the electric control groove 500.

In this embodiment of this application, for ease of description, one second side plate 820 is denoted as a second side plate 820a, and the other second side plate 820 is denoted as a second side plate 820b. The connecting plate 800, the reducer housing 400, and the motor housing 600 jointly form the four groove walls of the electric control groove 500.

It may be understood that, to enable the electric control groove 500 to form a semi-enclosed groove-shaped housing, in terms of the groove walls of the electric control groove 500, the first side plate 412 is separately connected to the second side plate 820b and the third side plate 610, and the second side plate 820a is also separately connected to the second side plate 820b and the third side plate 610. In terms of the groove walls and the groove bottom of the electric control groove 500, the second side plate 820a, the second side plate 820b, and the third side plate 610 are all connected to the first base plate 411.

Still refer to FIG. 3 and FIG. 4. In an embodiment, the connecting plate 800 further includes a second base plate 810. The second base plate 810 is configured to form the groove bottom of the electric control groove 500 with the first base plate 411, and in the axial direction O of the powertrain 10, the second base plate 810 is connected between the first base plate 411 and the second side plate 820a.

In this embodiment of this application, the first base plate 411 belongs to the outer peripheral wall 410 of the reducer housing 400, and a size of the first base plate 411 is limited by a size of the reducer housing 400. If only the first base plate 411 is used as the groove bottom of the electric control groove 500, accommodating space of the electric control groove 500 may be relatively small. In this embodiment of this application, the first base plate 411 of the reducer housing 400 and the second base plate 810 of the connecting plate 800 are used to jointly form the groove bottom of the electric control groove 500, thereby helping increase the accommodating space of the electric control groove 500. In an embodiment, in the axial direction O of the powertrain 10, a length of the first base plate 411 is less than a length of at least one of the second side plate 820b or the third side plate 610. In this embodiment of this application, the second base plate 810 can compensate for a difference between axial lengths of the first base plate 411 and the at least one of the second side plate 820b or the third side plate 610. In this embodiment of this application, an area of the groove bottom of the electric control groove 500 can be increased without increasing an axial length of the reducer housing 400.

Still refer to FIG. 4. In an embodiment, a gap that is between the first base plate 411 and the output bearing groove 421 and that is in the radial direction R of the powertrain 10 is configured to accommodate the cooling member 700, and the at least one hole 710 of the cooling member 700 faces the first base plate 411 in the radial direction R of the powertrain 10.

In this embodiment of this application, an opening direction of the output bearing groove 421 is parallel to the axial direction O of the powertrain 10, and the first base plate 411 and a groove wall of the output bearing groove 421 are spaced apart in the radial direction R of the powertrain 10. The cooling member 700 is located in the gap that is between the first base plate 411 and the output bearing groove 421 and that is in the radial direction R of the powertrain 10, and is arranged in a compact manner. The hole 710 of the cooling member 700 faces the first base plate 411, so that the coolant in the cooling member 700 can move to the first base plate 411 and exchange heat with the functional component 210 through the first base plate 411. In an embodiment, a projection of each hole 710 of the cooling member 700 is located in a projection of the first base plate 411 in the radial direction R of the powertrain 10. This embodiment of this application helps the first base plate 411 to receive coolant delivered through each hole 710, and helps improve utilization and cooling effect of the coolant.

Still refer to FIG. 4. In an embodiment, in the radial direction R of the powertrain 10, a spacing between the first base plate 411 and the cooling member 700 is less than a spacing between the cooling member 700 and the output bearing groove 421.

In this embodiment of this application, a radial spacing between the first base plate 411 and the cooling member 700 is relatively small, thereby helping shorten a transmission path of the coolant between the cooling member 700 and the first base plate 411, reduce a loss of the coolant on the transmission path, and improve cooling effect of the coolant. A radial spacing between the cooling member 700 and the output bearing groove 421 is relatively large, so that space can be reserved for the gear shaft assembly 110 of the reducer 100, thereby avoiding interference to a layout and mounting of the gear shaft assembly 110.

Refer to FIG. 8. FIG. 8 is a diagram of a powertrain 10 according to an embodiment of this application. In an embodiment, the gear shaft assembly 110 of the reducer 100 includes an output gear 113, and the output gear 113 is configured to be in transmission connection with the output shaft 111. A gap that is between the first side plate 412 and the output gear 113 and that is in the axial direction O of the powertrain 10 is configured to accommodate the cooling member 700, and the at least one hole 710 of the cooling member 700 faces the first side plate 412 in the axial direction O of the powertrain 10.

In this embodiment of this application, the output bearing groove 421 is configured to accommodate the output shaft bearing 112, and the output gear 113 is configured to be in transmission connection with the output shaft 111. The cooling member 700 is located in the gap that is between the first side plate 412 and the output gear 113 and that is in the axial direction O of the powertrain 10, and is arranged in a compact manner. The hole 710 of the cooling member 700 faces the first side plate 412, so that the coolant in the cooling member 700 can move to the first side plate 412 and exchange heat with the functional component 210 through the first side plate 412. In an embodiment, a projection of each hole 710 of the cooling member 700 is located in a projection of the first side plate 412 in the axial direction O of the powertrain 10. This embodiment of this application helps the first side plate 412 to receive coolant delivered through each hole 710, and helps improve utilization and cooling effect of the coolant.

Still refer to FIG. 8. In an embodiment, in the axial direction O of the powertrain 10, a spacing between the first side plate 412 and the cooling member 700 is less than a spacing between the cooling member 700 and the output gear 113.

In this embodiment of this application, a axial spacing between the first side plate 412 and the cooling member 700 is relatively small, thereby helping shorten a transmission path of the coolant between the cooling member 700 and the first side plate 412, reduce a loss of the coolant on the transmission path, and improve cooling effect of the coolant. A axial spacing between the cooling member 700 and the output gear 113 is relatively large, so that interference caused by the cooling member 700 to rotation of the output gear 113 can be avoided, thereby facilitating normal working of the gear shaft assembly 110.

Still refer to FIG. 4 and FIG. 5. In an embodiment, a ratio of a spacing between one of the first base plate 411 or the first side plate 412 and the cooling member 700 to an inner diameter of each hole 710 is greater than or equal to 1 and less than or equal to 3.

In this embodiment of this application, an example in which the hole 710 of the cooling member 700 faces the first base plate 411 is used, and a spacing that is between the first base plate 411 and the cooling member 700 and that is in the radial direction R of the powertrain 10 is greater than or equal to the inner diameter of each hole 710. The spacing between the first base plate 411 and the cooling member 700 is controlled within a proper range, so that mounting difficulty of the cooling member 700 can be reduced without affecting coolant delivery. In addition, the inner diameter of the hole 710 of the cooling member 700 is relatively small, thereby helping implement appropriate distribution of a coolant flow rate. The internal channel 720 of the cooling member 700 communicates with the internal flow channel 430 of the reducer housing 400. It may be understood that coolant in the internal flow channel 430 of the reducer housing 400 flows to another structure in addition to the cooling member 700. If the inner diameter of the hole 710 of the cooling member 700 is too large, most of the coolant may flow to the cooling member 700, and consequently, cooling of the another structure is adversely affected.

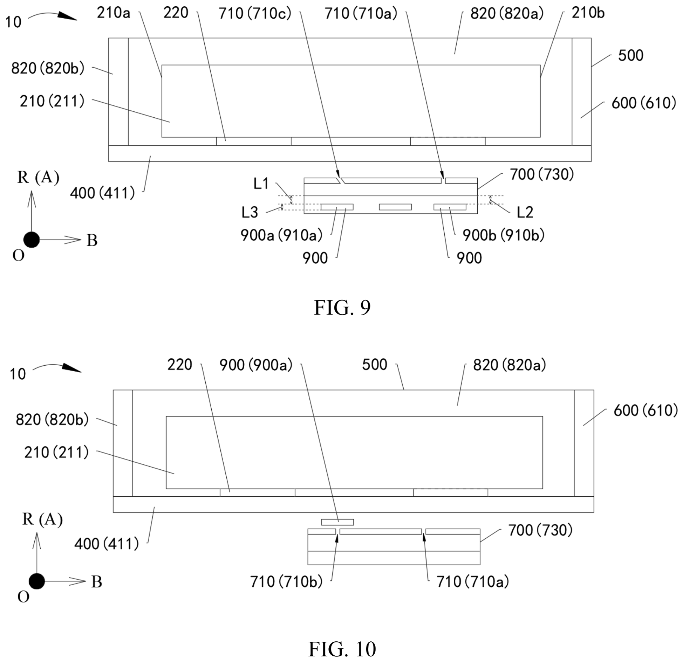

Refer to FIG. 4, FIG. 5, and FIG. 9. FIG. 9 is a diagram of a powertrain 10 according to an embodiment of this application. In an embodiment, as shown in FIG. 4 and FIG. 9, the cooling member 700 includes a cooling member housing 730 and a copper bar 900, and one end of the copper bar 900 is adjacent to the internal channel 720 of the cooling member 700 or exposed in the internal channel 720 of the cooling member 700.

As shown in FIG. 5, the axial bottom wall 420 of the reducer housing 400 further includes a communication hole 422, an opening of the communication hole 422 faces an inner cavity of the reducer housing 400, and the communication hole 422 is arranged between the first base plate 411 and the output bearing groove 421. One end of the copper bar 900 is configured to connect to a winding of the motor 300, and the other end of the copper bar 900 is configured to pass through the communication hole 422 to connect to the power module of the motor controller 200.

In this embodiment of this application, for ease of description, one copper bar 900 is denoted as a copper bar 900a, and one end of the copper bar 900a is denoted as a first sub-segment 910a. An inner wall of the cooling member housing 730 is configured to form the internal channel 720 and accommodate the first sub-segment 910a, and the hole 710 of the cooling member 700 penetrates the cooling member housing 730. That the first sub-segment 910a is exposed in the internal channel 720 of the cooling member 700 means that at least a part of a surface of the first sub-segment 910a can be in direct contact with coolant in the internal channel 720, to implement cooling of the first sub-segment 910a.

In this embodiment of this application, as an internal component of the powertrain 10, the copper bar 900a is configured to transmit electric energy between the power module and the winding. Because a working current flowing through the copper bar 900a is usually relatively large, heat generated by the copper bar 900a is also relatively large. Therefore, in this application, the cooling member 700 is reused to implement cooling and heat dissipation for the copper bar 900a, to avoid an overheating failure of the copper bar 900a. Specifically, the axial bottom wall 420 of the reducer housing 400 includes the communication hole 422, and the first sub-segment 910a of the copper bar 900a extends into the inner cavity of the reducer housing 400 through the communication hole 422. The first sub-segment 910a is fastened to the cooling member housing 730. Because the first sub-segment 910a is adjacent to the internal channel 720 or the first sub-segment 910a is exposed in the internal channel 720, in addition to flowing to the first base plate 411 or the first side plate 412 through the hole 710, the coolant in the internal channel 720 can be further configured to cool the copper bar 900a, thereby improving utilization of the coolant. In the radial direction R of the powertrain 10, the communication hole 422 is located between the first base plate 411 and the output bearing groove 421, that is, the communication hole 422 and the cooling member 700 are arranged opposite to each other in the axial direction O of the powertrain 10, thereby helping reduce difficulty in fastening the first sub-segment 910a to the cooling member housing 730.

In an embodiment, the cooling member housing 730 and the copper bar 900a are integrated through injection molding, thereby helping enhance stability of a connection between the copper bar 900a and the cooling member housing 730.

In an embodiment, the cooling member housing 730 is fastened to the axial bottom wall 420 of the reducer housing 400. In another embodiment, the cooling member housing 730 and the axial bottom wall 420 are integrated.

Still refer to FIG. 4, FIG. 5, and FIG. 9. In an embodiment, the cooling member 700 includes another copper bar 900. The another copper bar 900 is configured to electrically connect the power module of the motor controller 200 and the winding of the motor 300. The axial bottom wall 420 of the reducer housing 400 includes another communication hole 422. The another copper bar 900 extends from the electric control groove 500 into the inner cavity of the reducer housing 400 through the another communication hole 422. One end of the another copper bar 900 is fastened to the cooling member housing 730, and in the radial direction R of the powertrain 10, a difference between a spacing between the one end of the another copper bar 900 and the internal channel 720 of the cooling member 700 and a spacing between the first sub-segment 910a of the copper bar 900a and the internal channel 720 of the cooling member 700 is less than a thickness of the copper bar 900a.

In this embodiment of this application, for ease of description, the another copper bar 900 is denoted as a copper bar 900b, and one end of the copper bar 900b is denoted as a first sub-segment 910b. The copper bar 900b is also configured to transmit electric energy between the power module and the winding. Both the first sub-segment 910a and the first sub-segment 910b are fastened to the cooling member housing 730, and a difference in cooling effect needs to be considered for arrangement of the first sub-segment 910a and the first sub-segment 910b. In this embodiment of this application, the spacing between the first sub-segment 910a and the internal channel 720 of the cooling member 700 is denoted as L1, a spacing between the first sub-segment 910b and the internal channel 720 of the cooling member 700 is denoted as L2, and the thickness of the copper bar 900a is denoted as L3. It may be understood that a smaller spacing between the copper bar 900 and the internal channel 720 of the cooling member 700 leads to better cooling effect. A difference between L1 and L2 is less than L3, thereby helping control a cooling effect difference between the copper bar 900a and the copper bar 900b, and avoid a problem of local overheating of different copper bars 900.

Refer to FIG. 10. FIG. 10 is a diagram of a powertrain 10 according to an embodiment of this application. In another embodiment, the copper bar 900a is not fastened to the cooling member housing 730, and the copper bar 900a implements heat dissipation through the hole 710 of the cooling member 700. The at least one hole 710 includes a first hole 710a and a second hole 710b, the first hole 710a and the second hole 710b are spaced apart, and a projection of the first hole 710a is located in a projection of one functional component 210 in an opening direction A of the first hole 710a. The copper bar 900a is located between one of the first base plate 411 or the first side plate 412 and the second hole 710b, and a projection of the copper bar 900a does not overlap the projection of the first hole 710a in the opening direction A of the first hole 710a.

In this embodiment of this application, an example in which the hole 710 of the cooling member 700 faces the first base plate 411 is used, and the opening direction A of the first hole 710a is parallel to the radial direction R of the powertrain 10. The projection of the first hole 710a in the opening direction A of the first hole 710a avoids the copper bar 900a, and the projection of the first hole 710a is located in a projection of one functional component 210, so that the first hole 710a can be configured to deliver coolant to the first base plate 411 to cool the functional component 210, and the copper bar 900a does not cause interference to coolant delivery through the first hole 710a. The second hole 710b is spaced apart from the first hole 710a, and the copper bar 900a is located between the first base plate 411 and the second hole 710b. In this case, the copper bar 900a is located outside the cooling member housing 730. A projection of the second hole 710b at least partially overlaps the projection of the copper bar 900a in the opening direction A of the first hole 710a, so that coolant can flow to the copper bar 900a through the second hole 710b, to reduce a temperature of the copper bar 900a. This embodiment of this application provides greater flexibility and freedom in routing the copper bar 900a from the electric control groove 500.

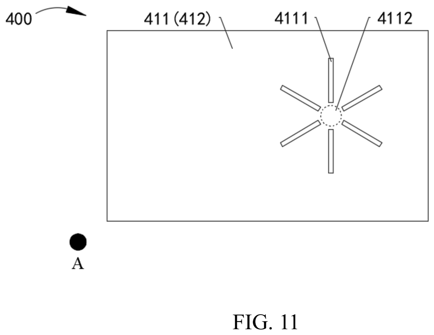

Refer to FIG. 3 and FIG. 11. FIG. 11 is a diagram of a reducer housing 400 according to an embodiment of this application. In an embodiment, one of the first base plate 411 or the first side plate 412 includes a plurality of protrusions 4111, and the plurality of protrusions 4111 protrude toward the cooling member 700 in the opening direction A of the first hole 710a. The plurality of protrusions 4111 surround the projection of the first hole 710a onto the one of the first base plate 411 or the first side plate 412 in the opening direction A of the first hole 710a, and projections of the plurality of protrusions 4111 partially overlap the projection of the functional component 210 in the opening direction A of the first hole 710a.

In this embodiment of this application, an example in which the hole 710 of the cooling member 700 faces the first base plate 411 is used. A projection of the first hole 710a onto the first base plate 411 in the opening direction A of the first hole 710a is equivalent to a region in which coolant moving from the first hole 710a strikes the first base plate 411, and the region is denoted as a first region 4112. A plurality of protrusions 4111 of the first base plate 411 surround the first region 4112, so that after the coolant flows to the first region 4112, the coolant can radially disperse across the first base plate 411 under guidance of the plurality of protrusions 4111 by using the first region 4112 as a center, thereby helping expand coverage of the coolant on the first base plate 411 and improve heat dissipation efficiency. Projections of the plurality of protrusions 4111 partially overlap a projection of one functional component 210 in the opening direction A of the first hole 710a, so that the coolant can cool the functional component 210 in a targeted manner. In an embodiment, the projections of the plurality of protrusions 4111 do not overlap a projection of another hole 710 of the cooling member 700 in the opening direction A of the first hole 710a, to avoid interference to coolant delivery through the another hole 710.

Still refer to FIG. 9. In an embodiment, the at least one hole 710 further includes a third hole 710c. The third hole 710c and the first hole 710a are spaced apart in a length direction B of the functional component 210, and both the third hole 710c and the first hole 710a are located in the projection of the functional component 210 in the opening direction A of the first hole 710a. A spacing between the third hole 710c and the first hole 710a in the length direction B of the functional component 210 is less than a length of the functional component 210, and an opening direction A of the third hole 710c intersects with the opening direction A of the first hole 710a.

In this embodiment of this application, projections of both the first hole 710a and the third hole 710c are located in the projection of the same functional component 210 in the opening direction A of the first hole 710a, and coolant flows to one of the first base plate 411 or the first side plate 412 through the first hole 710a and the third hole 710c, to cool and dissipate heat for the same functional component 210. For the first hole 710a and the third hole 710c, the spacing between the first hole 710a and the third hole 710c in the length direction B of the functional component 210 is less than the length of the functional component 210, thereby helping reduce space occupied by the cooling member 700 in the reducer housing 400. The opening directions of the first hole 710a and the third hole 710c intersect, so that coverage of the coolant on the first base plate 411 or the first side plate 412 can be expanded when an overall size of the cooling member 700 is controlled.

For example, the functional component 210 is a busbar capacitor 211, and a length of the busbar capacitor 211 is usually relatively long. To enable the coolant to cool edges of the busbar capacitor 211 as much as possible, if the opening directions of the first hole 710a and the third hole 710c are parallel, the spacing between the first hole 710a and the third hole 710c should be as close as possible to the length of the busbar capacitor 211, and this is not conducive to control of the size of the cooling member 700. In an embodiment, the functional component 210 includes a first end 210a and a second end 210b that are opposite to each other in the length direction B of the functional component 210, a spacing between the third hole 710c and the first end 210a is less than a spacing between the first hole 710a and the first end 210a in the length direction B of the functional component 210, and the opening direction of the third hole 710c faces the first end 210a.

Refer to FIG. 2 and FIG. 4. In an embodiment, the plurality of functional components 210 of the motor controller 200 include at least one of a busbar capacitor 211 or an inductor 212, and the first base plate 411 is configured to fasten the at least one of the busbar capacitor 211 or the inductor 212. The at least one of the busbar capacitor 211 or the inductor 212, the first base plate 411, and the output bearing groove 421 are sequentially arranged in the radial direction R of the powertrain 10.

A distance between the at least one of the busbar capacitor 211 or the inductor 212 and one of the first base plate 411 or the first side plate 412 is less than or equal to a distance between the cooling member 700 and the one of the first base plate 411 or the first side plate 412.

In this embodiment of this application, the busbar capacitor 211 is configured to transmit and adjust a direct current, including but not limited to smoothing a voltage, reducing an inductance parameter, reducing a spike voltage, absorbing a high-pulse current from the power module, and preventing overcharging of the voltage and impact of an instantaneous voltage on the power module. The inductor 212 is configured to perform filtering and regulate a current.

In this embodiment of this application, the first base plate 411 supports the at least one of the busbar capacitor 211 or the inductor 212. In an embodiment, a surface that is of the first base plate 411 and that faces the functional component 210 in the radial direction R of the powertrain 10 is a flat surface, thereby facilitating the first base plate 411 in supporting the functional component 210. When the hole 710 faces the first base plate 411, the at least one of the busbar capacitor 211 or the inductor 212, the first base plate 411, and the output bearing groove 421 are sequentially arranged in the radial direction R of the powertrain 10, and a distance between the at least one of the busbar capacitor 211 or the inductor 212 and the first base plate 411 is less than or equal to a distance between the cooling member 700 and the first base plate 411, so that a transmission path of the coolant between the cooling member 700 and the at least one of the busbar capacitor 211 or the inductor 212 can be shortened. When the hole 710 faces the first side plate 412, a distance between the at least one of the busbar capacitor 211 or the inductor 212 and the first side plate 412 is less than or equal to a distance between the cooling member 700 and the first side plate 412, and the at least one of the busbar capacitor 211 or the inductor 212, the first base plate 411, and the output bearing groove 421 are sequentially arranged in the radial direction R of the powertrain 10. This means that compared with the second side plate 820a and the cooling member 700, the at least one of the busbar capacitor 211 or the inductor 212 is closer to the first side plate 412 in the axial direction O of the powertrain 10, so that a heat transmission path can also be shortened, thereby improving cooling effect.

The foregoing describes in detail the powertrain and the vehicle provided in embodiments of this application. Specific examples are used in this specification to describe principles and embodiments of this application. The descriptions of the foregoing embodiments are merely used to help understand the method and the core idea of this application. In addition, a person of ordinary skill in the art may make modifications to the specific embodiments and the application scope based on the idea of this application. In conclusion, the content of this specification shall not be construed as a limitation on this application.

## Claims

1. A powertrain, wherein the powertrain comprises a reducer and a motor controller, a housing of the powertrain comprises a reducer housing and an electric control groove, the reducer housing is configured to accommodate a cooling member and a gear shaft assembly of the reducer, and the electric control groove is configured to accommodate a plurality of functional components of the motor controller;
an outer peripheral wall of the reducer housing comprises a first base plate and a first side plate that are connected to each other, an axial bottom wall of the reducer housing comprises an output bearing groove, the output bearing groove is configured to accommodate a bearing of an output shaft of the gear shaft assembly, the first side plate protrudes from the first base plate and away from the output bearing groove, the first side plate is a groove wall of the electric control groove, and the first base plate is a groove bottom of the electric control groove; and
the cooling member comprises at least one hole, the at least one hole communicates with an internal flow channel of the reducer housing through an internal channel of the cooling member, and the at least one hole faces one of the first base plate or the first side plate.

2. The powertrain according to claim 1, wherein a gap that is between the first base plate and the output bearing groove and that is in a radial direction of the powertrain is configured to accommodate the cooling member, and the at least one hole of the cooling member faces the first base plate in the radial direction of the powertrain.

3. The powertrain according to claim 2, wherein in the radial direction of the powertrain, a spacing between the first base plate and the cooling member is less than a spacing between the cooling member and the output bearing groove.

4. The powertrain according to claim 1, wherein the gear shaft assembly of the reducer comprises an output gear, the output gear is configured to be in transmission connection with the output shaft, a gap that is between the first side plate and the output gear and that is in an axial direction of the powertrain is configured to accommodate the cooling member, and the at least one hole of the cooling member faces the first side plate in the axial direction of the powertrain.

5. The powertrain according to claim 4, wherein in the axial direction of the powertrain, a spacing between the first side plate and the cooling member is less than a spacing between the cooling member and the output gear.

6. The powertrain according to any one of claims 1 to 5, wherein a ratio of a spacing between the one of the first base plate or the first side plate and the cooling member to an inner diameter of each hole is greater than or equal to 1 and less than or equal to 3.

7. The powertrain according to any one of claims 1 to 6, wherein the plurality of functional components of the motor controller comprise at least one of a busbar capacitor or an inductor, the first base plate is configured to fasten the at least one of the busbar capacitor or the inductor, and the at least one of the busbar capacitor or the inductor, the first base plate, and the output bearing groove are sequentially arranged in the radial direction of the powertrain; and
a distance between the at least one of the busbar capacitor or the inductor and the one of the first base plate or the first side plate is less than or equal to a distance between the cooling member and the one of the first base plate or the first side plate.

8. The powertrain according to any one of claims 1 to 7, wherein the cooling member comprises a cooling member housing and a copper bar, and one end of the copper bar is adjacent to the internal channel of the cooling member or exposed in the internal channel of the cooling member, wherein
the axial bottom wall of the reducer housing further comprises a communication hole, an opening of the communication hole faces an inner cavity of the reducer housing, the communication hole is arranged between the first base plate and the output bearing groove, one end of the copper bar is configured to connect to a winding of a motor, and the other end of the copper bar is configured to pass through the communication hole to connect to a power module of the motor controller.

9. The powertrain according to any one of claims 1 to 7, wherein the powertrain comprises a copper bar, the copper bar is configured to electrically connect a power module of the motor controller and a winding of a motor, the at least one hole comprises a first hole and a second hole, the first hole and the second hole are spaced apart, and a projection of the first hole is located in a projection of one of the functional components in an opening direction of the first hole; and
the copper bar is located between the one of the first base plate or the first side plate and the second hole, and a projection of the copper bar does not overlap the projection of the first hole in the opening direction of the first hole.

10. The powertrain according to any one of claims 1 to 9, wherein the one of the first base plate or the first side plate comprises a plurality of protrusions, the plurality of protrusions protrude toward the cooling member in the opening direction of the first hole, the plurality of protrusions surround the projection of the first hole onto the one of the first base plate or the first side plate in the opening direction of the first hole, and projections of the plurality of protrusions partially overlap the projection of the functional component in the opening direction of the first hole.

11. The powertrain according to any one of claims 1 to 10, wherein the at least one hole comprises the first hole and a third hole, the first hole and the third hole are spaced apart in a length direction of the functional component, and both the third hole and the first hole are located in the projection of the functional component in the opening direction of the first hole; and
a spacing between the third hole and the first hole in the length direction of the functional component is less than a length of the functional component, and an opening direction of the third hole intersects with the opening direction of the first hole.

12. The powertrain according to any one of claims 1 to 11, wherein the powertrain further comprises a motor, the housing of the powertrain further comprises a motor housing and a connecting plate, and the motor housing is configured to accommodate a stator and a rotor of the motor, wherein
the connecting plate and the motor housing are arranged on a same side of the reducer housing in the axial direction of the powertrain, the connecting plate is separately fastened to the outer peripheral wall of the reducer housing and an outer peripheral wall of the motor housing, and the connecting plate, the first base plate, the first side plate, and the outer peripheral wall of the motor housing are configured to enclose the electric control groove.

13. The powertrain according to claim 12, wherein the connecting plate comprises two second side plates connected to each other, the outer peripheral wall of the motor housing comprises a third side plate, one of the second side plates and the first side plate are arranged opposite to each other in the axial direction of the powertrain, and the other second side plate and the third side plate are arranged opposite to each other; and
the two second side plates and the third side plate are the other three groove walls of the electric control groove.

14. A vehicle, wherein the vehicle comprises a vehicle frame, a battery pack, and the powertrain according to any one of claims 1 to 13, the vehicle frame is configured to fasten the battery pack and the powertrain, the battery pack is configured to supply power to the motor by using the motor controller, and the motor is configured to be in transmission connection with the reducer to drive a wheel of the vehicle.
